(19) Europäisches Patentamt
European Patent Office
Office européen des brevets

(11) **EP 1 804 041 A1**

(12) **DEMANDE DE BREVET EUROPEEN**

(43) Date de publication:
    **04.07.2007 Bulletin 2007/27**

(51) Int Cl.:
    **G01L 5/20** (2006.01)      **B60T 8/1755** (2006.01)
    **B62D 6/04** (2006.01)

(21) Numéro de dépôt: **06301206.6**

(22) Date de dépôt: **01.12.2006**

(84) Etats contractants désignés:
    **AT BE BG CH CY CZ DE DK EE ES FI FR GB GR
    HU IE IS IT LI LT LU LV MC NL PL PT RO SE SI
    SK TR**
    Etats d'extension désignés:
    **AL BA HR MK YU**

(30) Priorité: **08.12.2005 FR 0553787**

(71) Demandeur: **PEUGEOT CITROEN AUTOMOBILES
    SA**
    **78140 Vélizy Villacoublay (FR)**

(72) Inventeurs:
    • **Pengov, Marco**
      **92500 Rueil-Malmaison (FR)**
    • **Margolis, M. Donald**
      **EP Marcero, CA 95618 (US)**
    • **Ozkan, Basar**
      **Davis, CA 95616 (US)**

(54) **Méthode d'estimation en temps réel d'un effort avant et d'un effort arrière appliqués par le sol à un véhicule**

(57)      L'invention concerne une méthode pour estimer en temps réel, dans un véhicule automobile, un effort avant ($F_{yV}$) et un effort arrière ($F_{yR}$), ces efforts étant appliqués par le sol respectivement aux roues avant et aux roues arrières du véhicule selon une direction transversale. La méthode consiste à :
- équiper ce véhicule d'un dispositif de mesure délivrant un signal représentatif d'une accélération transversale mesurée ($\gamma_T$) et un signal représentatif d'une vitesse de lacet mesurée ($V_\psi$), et d'une unité de traitement de signaux ;
- appliquer à ces signaux, un traitement de détermination d'effort avant et d'effort arrière basé sur un modèle dynamique du véhicule tel qu'un modèle du type bicyclette.
     L'invention s'applique au domaine de la sécurité active.

Fig.4

**Description**

L'invention concerne une méthode pour estimer en temps réel sur un véhicule qui roule un effort transversal avant appliqué par le sol aux roues avant, et un effort transversal arrière appliqué par le sol aux roues arrières de ce véhicule.

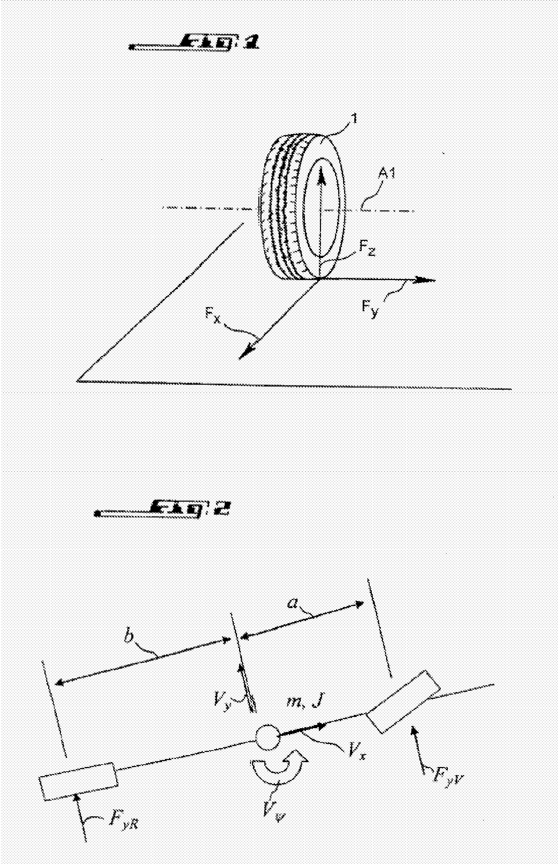

Les efforts transmis par le sol à une roue du véhicule se décomposent selon trois directions. Comme illustré sur la figure 1, ces trois composantes sont un effort longitudinal $Fx$ orienté selon la direction d'avancement du véhicule, un effort transversal $Fy$ orienté horizontalement perpendiculairement à la direction longitudinale, c'est-à-dire parallèlement à l'axe A1 de la roue 1, et un effort vertical $Fz$ encore appelé charge de la roue 1.

L'amélioration du confort et de la sécurité active nécessite de connaître en temps réel les efforts longitudinaux et transversaux des roues avant et des roues arrières. Leur connaissance permet par exemple de contrôler la position, la vitesse et l'accélération du véhicule, et, plus généralement, le comportement de ce véhicule en agissant sur des organes pilotés tels que les freins, le moteur, la direction active ou encore les suspensions.

Les efforts longitudinaux et transversaux ne peuvent cependant pas être mesurés en temps réel de façon directe pour un coût compatible avec la production en grande série des véhicules. Il est donc recouru par exemple à des méthodes indirectes consistant à réguler une variable autre qui peut être mesurée en temps réel.

Cette autre variable est par exemple la position transversale des parties supérieures des roues qui est significative de leur angle de carrossage ; l'accélération transversale du véhicule ; la vitesse de lacet du véhicule c'est à dire sa vitesse de rotation autour d'un axe vertical ; ou encore l'angle du volant.

Ces méthodes indirectes sont satisfaisantes pour la dynamique longitudinale, mais elles ne le sont pas pour les efforts transversaux.

L'estimation des efforts transversaux peut être effectuée avec des méthodes d'estimation en boucle ouverte utilisant différentes mesures en association avec un modèle du pneu.

Cependant, les efforts transversaux sont fonction des dérives des pneus, des angles de braquage et de carrossage des roues et de la charge de chaque roue. De plus, les dérives des pneus dépendent elles-mêmes des vitesses longitudinale et transversale du véhicule ainsi que de la position du centre de gravité du véhicule, de sorte que les méthodes d'estimation en boucle ouverte ne sont pas suffisamment fiables.

Le but de l'invention est de proposer une méthode permettant d'estimer les efforts transversaux en temps réel de façon fiable.

A cet effet, l'invention a pour objet une méthode pour estimer en temps réel, dans un véhicule automobile, un effort avant et un effort arrière, ces efforts étant appliqués par le sol respectivement aux roues avant et aux roues arrières du véhicule selon une direction transversale, cette méthode consistant à :

- équiper ce véhicule d'un dispositif de mesure délivrant un signal représentatif d'une accélération transversale mesurée et un signal représentatif d'une vitesse de lacet mesurée, et d'une unité de traitement ;
- appliquer à ces signaux, dans l'unité de traitement, un traitement de détermination d'effort avant et d'effort arrière basé sur un modèle dynamique du véhicule tel qu'un modèle du type bicyclette sans pneu défini notamment par un empattement avant un empattement arrière, une masse et un moment d'inertie de lacet, pour délivrer un signal représentatif de l'effort avant estimé et de l'effort arrière estimé.

Selon une caractéristique de l'invention, le traitement inclut une rétroaction, et met en oeuvre un modèle dynamique permettant de déterminer une accélération transversale et une vitesse de lacet à partir d'un effort avant et d'un effort arrière, et consiste à :

- appliquer aux signaux représentatifs de l'effort avant estimé et de l'effort arrière estimé, un traitement basé sur le modèle dynamique pour former un signal représentatif d'une accélération transversale estimée et un signal représentatif d'une vitesse de lacet estimée;
- former un premier signal d'écart représentatif de la différence entre l'accélération transversale mesurée et estimée, et un second signal d'écart représentatif de la différence entre la vitesse de lacet mesurée et estimée ;
- former le signal représentatif de l'effort avant par combinaison d'un signal issu d'un traitement tel qu'un traitement proportionnel et/ou intégral appliqué au premier signal d'écart, avec un signal issu d'un traitement tel qu'un traitement proportionnel et/ou intégral appliqué au second signal d'écart ;
- former le signal représentatif de l'effort arrière par combinaison d'un signal issu d'un traitement tel qu'un traitement proportionnel et/ou intégral appliqué au premier signal d'écart, avec un signal issu d'un traitement tel qu'un traitement proportionnel et/ou intégral appliqué au second signal d'écart.

Selon une autre caractéristique de l'invention,

- le signal représentatif de l'effort avant est obtenu par une combinaison linéaire d'un signal issu d'un traitement proportionnel appliqué au premier signal d'écart, avec un signal issu d'un traitement proportionnel et intégral appliqué au second signal d'écart ;
- le signal représentatif de l'effort arrière est obtenu par autre combinaison linéaire d'un signal issu d'un traitement proportionnel appliqué au premier signal d'écart, avec un signal issu d'un traitement proportionnel et intégral appliqué au second signal d'écart.

Selon une autre caractéristique de l'invention, la méthode est discrétisée, et consiste à déterminer une nouvelle valeur d'effort avant estimé et une nouvelle valeur d'effort arrière estimé, à partir de nouvelles mesures d'accélération transversale et de vitesse de lacet, et à partir de valeurs courantes d'effort avant estimé et d'effort arrière estimé, et par actualisation et correction de valeurs intermédiaires d'effort avant et arrière, consistant à :

- appliquer aux valeurs courantes d'effort avant estimé et d'effort arrière estimé, un traitement basé sur le modèle dynamique pour déterminer des nouvelles valeurs d'accélération transversale estimée et de vitesse de lacet estimée ;
- déterminer une première valeur d'écart correspondant à la différence entre la nouvelle mesure d'accélération transversale et la nouvelle accélération transversale estimée, et une seconde valeur d'écart correspondant à la différence entre la nouvelle mesure de vitesse de lacet et la nouvelle vitesse de lacet estimée ;
- déterminer une nouvelle valeur intermédiaire d'effort avant par ajout à la valeur courante intermédiaire d'effort avant d'une valeur proportionnelle au premier écart, et une nouvelle valeur intermédiaire d'effort arrière par ajout à la valeur courante intermédiaire d'effort arrière d'une autre valeur proportionnelle au premier écart ;
- déterminer les nouvelles valeurs d'effort avant estimé et d'effort arrière estimé par application aux nouvelles valeurs intermédiaires d'efforts avant et arrière d'un traitement de correction consistant à ajouter à la nouvelle valeur intermédiaire d'effort avant une valeur proportionnelle au second écart et à soustraire à la nouvelle valeur intermédiaire d'effort arrière une valeur proportionnelle au second écart.

L'invention concerne également une méthode pour estimer dans un véhicule et en temps réel, un effort transversal appliqué par le sol à chaque roue, consistant à :

- équiper ce véhicule de dispositifs de mesure d'effort de charge aptes à délivrer des signaux représentatifs de l'effort de charge subi par chaque roue ;
- déterminer un effort avant estimé et un effort arrière estimé conformément à la méthode ci-dessus ;
- déterminer dans l'unité de traitement l'effort transversal appliqué à la roue avant droite et à la roue avant gauche comme étant proportionnels respectivement à la charge de la roue avant droite et à la charge de la roue avant gauche et ayant une somme correspondant à l'effort avant estimé ;
- déterminer dans l'unité de traitement l'effort transversal appliqué à la roue arrière droite et à la roue arrière gauche comme étant proportionnels respectivement à la charge de la roue arrière droite et à la charge de la roue arrière gauche et ayant une somme correspondant à l'effort arrière estimé;

A titre de variante, l'invention concerne également une méthode pour estimer dans un véhicule et en temps réel, un effort transversal appliqué par le sol à chaque roue, consistant à :

- équiper ce véhicule d'un dispositif d'estimation d'effort de charge apte à délivrer des signaux estimés représentatifs de l'effort de charge subi par chaque roue ;
- déterminer un effort avant estimé et un effort arrière estimé conformément à la méthode ci-dessus ;
- déterminer dans l'unité de traitement l'effort transversal appliqué à la roue avant droite et à la roue avant gauche comme étant proportionnels respectivement à la charge de la roue avant droite et à la charge de la roue avant gauche et ayant une somme correspondant à l'effort avant estimé ;
- déterminer dans l'unité de traitement l'effort transversal appliqué à la roue arrière droite et à la roue arrière gauche comme étant proportionnels respectivement à la charge de la roue arrière droite et à la charge de la roue arrière gauche et ayant une somme correspondant à l'effort arrière estimé ;

Selon une première caractéristique, la méthode définie ci-dessus, consiste à :

- équiper ce véhicule d'un dispositif de mesure délivrant un signal représentatif de l'accélération longitudinale mesurée ; et
- appliquer ce signal et l'accélération transversale à l'entrée du dispositif d'estimation pour délivrer des signaux estimés représentatifs de l'effort de charge subi par chaque roue.

Selon cette première caractéristique, le dispositif d'estimation implémente les équations suivantes :

$$* F_{zVGe} = \frac{m\,g\,b}{2E} + \frac{m\,h\,\gamma_x}{E} - \frac{m\,h\,\gamma_t}{v}\,,$$

$$* F_{zVDe} = \frac{m\,g\,b}{2E} - \frac{m\,h\,\gamma_x}{E} + \frac{m\,h\,\gamma_t}{v}\,,$$

$$* F_{zRGe} = \frac{m\,g\,a}{2E} + \frac{m\,h\,\gamma_x}{E} - \frac{m\,h\,\gamma_t}{v}\,,$$

$$* F_{zRDe} = \frac{m\,g\,a}{2E} - \frac{m\,h\,\gamma_x}{E} + \frac{m\,h\,\gamma_t}{v}\,.$$

avec
a et b, respectivement les empattements avant et arrière,
E=a+b est l'empattement total,
v est la voie du véhicule,
h : hauteur du centre de gravité G du véhicule par rapport au sol,
m : masse du véhicule,
g : l'accélération de la pesanteur,
$\gamma_x$ et $\gamma_T$ : respectivement les accélérations longitudinale et transversale du véhicule considérées au centre de gravité G

Selon une autre caractéristique de cette variante, la méthode consiste à :

-    équiper le véhicule d'un ensemble de dispositifs de mesure délivrant des signaux représentatifs de la vitesse véhicule, de la vitesse de roulis, de la vitesse de tangage, de l'accélération longitudinale, de la vitesse verticale, et des débattements des roues par rapport à la caisse ; et
-    appliquer ces signaux, la vitesse de lacet et l'accélération transversale à l'entrée d'un dispositif d'estimation.

Selon cette autre caractéristique, le dispositif d'estimation comporte un modèle mécanique du véhicule recevant comme première série d'entrées respectivement, la vitesse longitudinale, les accélérations longitudinale et transversale, la vitesse de lacet, la vitesse verticale, la vitesse de roulis, et la vitesse de tangage, et recevant comme deuxième série d'entrées, les efforts verticaux estimés appliqués par le sol aux pneumatiques des roues respectivement avant gauche, avant droit, arrière gauche et arrière droit ; ces efforts correspondant respectivement aux sorties de fonctions de transfert déterminées et spécifiques à chaque roue, fonctions de transfert qui reçoivent sur leurs entrées respectives, l'écart entre les débattements des roues mesurés respectivement par des dispositifs de mesure aptes à délivrer des signaux représentatifs desdits débattements, et les débattements des roues estimés par le modèle.

L'invention sera maintenant décrite plus en détail, et en référence aux dessins annexés qui en illustrent une forme de réalisation à titre d'exemple non limitatif.

La figure 1 illustre la décomposition des efforts appliqués par le sol à une roue de véhicule automobile ;
La figure 2 est une représentation schématique d'un modèle mécanique de type bicyclette ;
La figure 3 est un schéma bloc illustrant les entrées et sorties dans la méthode selon l'invention ;
La figure 4 est une représentation sous forme de schéma bloc de la méthode selon l'invention ;
La figure 5 est une représentation schématique d'un modèle mécanique dynamique d'un véhicule automobile à quatre roues ;
La figure 6 est une représentation sous forme de schéma bloc d'un dispositif d'estimation statique des efforts verticaux;
La figure 7 est une représentation sous forme de schéma bloc d'un dispositif d'estimation dynamique des efforts verticaux ; et

La figure 8 est un schéma bloc représentatif de l'unité de traitement des signaux issus des différents capteurs ou estimateurs.

L'invention concerne une méthode en boucle fermée pour estimer en temps réel des entrées d'un système qui est un véhicule automobile, les entrées estimées étant les efforts transversaux avant et arrière.

Les méthodes d'estimation en boucle fermée, aussi connues sous le terme "observateur", permettent d'estimer des variables d'états telles que la position, l'angle, la vitesse, l'accélération, en utilisant un modèle mécanique dynamique piloté par une rétroaction dépendant de l'erreur d'estimation.

La méthode selon l'invention s'applique à un système physique modélisé sous la forme suivante :

dans laquelle :

$$[\mathbf{1}] \quad \begin{cases} \dot{X}(t) = A\,X(t) + B\,U(t) \\ Y(t) = C\,X(t) \end{cases}$$

$t$ : temps
$X$ : variables d'état ;
U : variables d'entrée/commande ;
Y : variables de sorties/mesures ;

Les variables $X$, $U$ et $Y$ sont des vecteurs, respectivement de dimensions $m$, $n$ et $p$. $A$, $B$ et $C$ sont des matrices constantes représentatives du système physique considéré.

L'idée à la base de l'invention est d'estimer les composantes du vecteur U, dont l'estimation est notée $U_e$, en désignant par $T(s)$ la fonction de transfert reliant l'entrée du système à sa sortie. On a alors :

$$[\mathbf{2}] \quad T(s) = \frac{Y(s)}{U(s)} = C\,(sI - A)^{-1}\,B$$

dans laquelle s est la variable de Laplace, et I la matrice identité.

En notant $G_d(s) = \dfrac{U_e(s)}{U(s)}$ la fonction de transfert que l'on souhaite avoir entre l'entrée à estimer U et l'entrée estimée $U_e$, l'estimation de l'entrée est donnée par l'équation $U_e(s) = L(s)(Y(s)-Y_e(s))$ dans laquelle $L$ est une matrice de gain définie par la fonction de transfert
$L(s) = (G_d(s)(I - G_d(s))^{-1}T^{-1}(s)$,
$Y_e(s)$ est l'estimation des mesures, obtenue par l'équation suivante :

$$[\mathbf{3}] \quad \begin{cases} \dot{X}_e(t) = A\,X_e(t) + B\,L(t)\big(Y(t) - Y_e(t)\big) \\ Y_e(t) = C\,X_e(t) \end{cases}.$$

On a alors $U_e$ qui tend vers $U$, c'est-à-dire $\lim_{t\to\infty}\|U(t)-U_e(t)\|=0$ de manière asymptotique, lorsque différentes conditions sont vérifiées, à savoir le fait que la matrice T soit inversible, que $G_d$ soit adaptée pour rendre L causale, et que les matrices A, B et C soient suffisamment pleines.

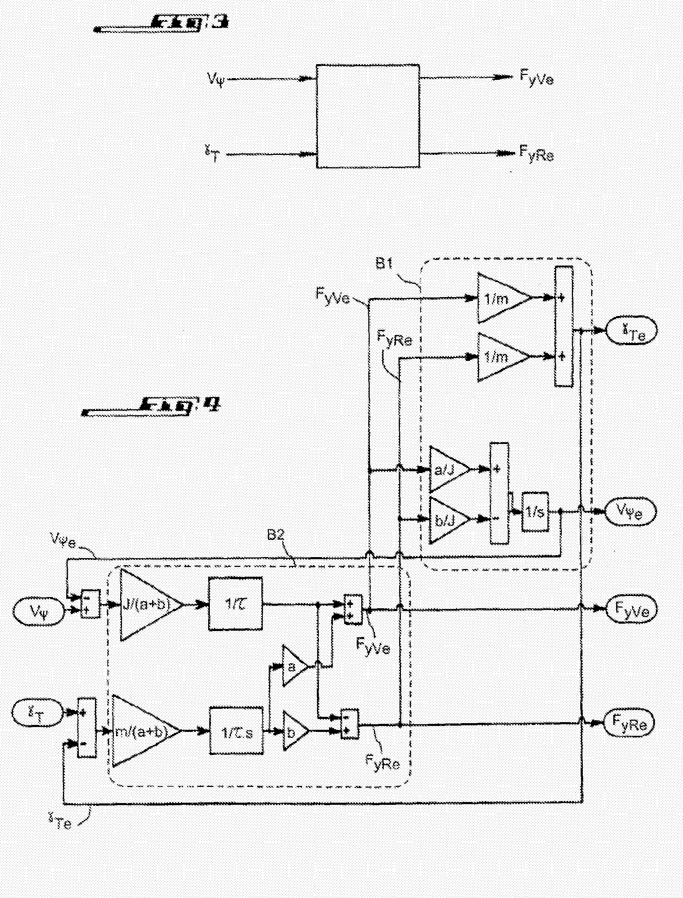

Selon l'invention, l'estimation des efforts transversaux est réalisée en appliquant au véhicule un modèle mécanique dynamique simplifié tel qu'un modèle de type bicyclette sans pneu comme celui qui est schématisé en figure 2. La mise en oeuvre d'un modèle bicyclette sans pneu est en effet suffisante pour déterminer l'effort transversal avant $F_{yV}$ et arrière $F_{yR}$, attendu que les efforts par roue peuvent en être déduits car ils sont proportionnels aux charges de ces roues.

L'effort transversal avant $F_{yV}$ est appliqué par le sol à la roue avant du modèle bicyclette, il correspond à la somme des efforts transversaux appliqués aux deux roues avant du véhicule. De façon analogue l'effort transversal arrière $F_{yR}$ correspond à la somme des efforts appliqués aux roues arrières du véhicule.

Comme représenté schématiquement en figure 2, ce modèle dynamique du type bicyclette sans pneu est défini par une masse $m$, un moment d'inertie de lacet noté $J$, un empattement avant et un empattement arrière notés respectivement $a$ et $b$. L'empattement avant et arrière correspondent respectivement à la distance séparant longitudinalement les roues avant du centre de gravité du véhicule, et à la distance séparant longitudinalement les roues arrières de ce centre de gravité. Le véhicule est équipé d'un dispositif de mesure situé à proximité du centre de gravité, et qui délivre un signal représentatif de l'accélération longitudinale et un signal représentatif de la vitesse de lacet.

Le véhicule avance longitudinalement à une vitesse notée $V_x$, il a une vitesse transversale notée $V_y$, il est animé d'une vitesse dite de lacet, notée $V_\psi$ et qui correspond à sa vitesse de rotation autour d'un axe vertical.

Les équations du véhicule conformément au modèle dynamique de bicyclette sans pneu sont données ci-dessous :

$$[4] \quad \dot{X} = \begin{bmatrix} 0 & V_x \\ 0 & 0 \end{bmatrix} \begin{bmatrix} V_y \\ V_\psi \end{bmatrix} + \begin{bmatrix} 1/m & 1/m \\ a/J & -b/J \end{bmatrix} \begin{bmatrix} F_{yV} \\ F_{yR} \end{bmatrix} \qquad \dot{X} = \begin{bmatrix} \dot{V}_y \\ \dot{V}_\psi \end{bmatrix} = A\,X + B\,U$$

La vitesse transversale n'est pas mesurée directement, mais on dispose de mesures de la vitesse de lacet $V_\psi$ et de l'accélération transversale $\gamma_t = \dot{V}_y - V_x V_\psi$, ces mesures étant issues d'un ou plusieurs dispositifs incluant par exemple deux capteurs d'accélération dédiés.

Ceci permet de réécrire le modèle comme suit :

$$[5] \quad \begin{cases} \gamma_t = \dfrac{1}{m} F_{yV} + \dfrac{1}{m} F_{yR} \\ \dot{V}_\psi = \dfrac{a}{J} F_{yV} - \dfrac{b}{J} F_{yR} \end{cases} \quad \text{et} \quad Y = \begin{bmatrix} \gamma_t \\ V_\psi \end{bmatrix}$$

La matrice reliant $\begin{bmatrix} F_{yV} \\ F_{yR} \end{bmatrix}$ à $\begin{bmatrix} \gamma_t \\ V_\psi \end{bmatrix}$, vaut alors :

$$T(s) = \begin{bmatrix} 1/m & 1/m \\ a/J & -b/J \end{bmatrix}.$$

La fonction de transfert $G_d(s)$ liant l'entrée à estimer $U$ et l'entrée estimée $U_e$ peut être choisie comme étant $G_d(s) = \dfrac{1}{1 + \tau s}$, attendu que le choix de cette fonction de transfert est libre. $\tau$ est une constante de temps, c'est à dire significative du temps de réaction du système, et elle vaut par exemple 1/100ème de seconde.

L'entrée estimée $U_e$ est alors donnée par l'expression suivante :

$$[6] \quad U_e(s) = L(s)\big(Y(s) - Y_e(s)\big) = \frac{1}{\tau s} \begin{bmatrix} \dfrac{b\,m}{(a+b)} & \dfrac{J\,s}{(a+b)} \\ \dfrac{a\,m}{(a+b)} & \dfrac{-J\,s}{(a+b)} \end{bmatrix} \big(Y(s) - Y_e(s)\big)$$

dans laquelle

$$[7] \quad Y_e = \begin{bmatrix} \gamma_{te} \\ V_{\psi e} \end{bmatrix} = \begin{bmatrix} 1 & 0 \\ 0 & \frac{1}{s} \end{bmatrix} \begin{bmatrix} \frac{1}{m} & \frac{1}{m} \\ \frac{a}{J} & -\frac{b}{J} \end{bmatrix} U_e(s)$$

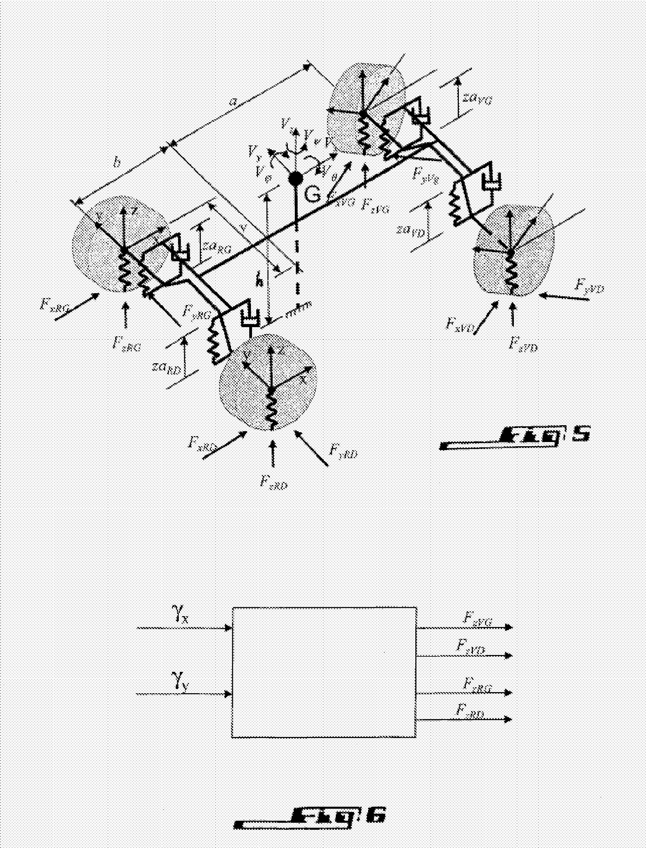

Comme illustré par la figure 3, la méthode selon l'invention permet de déterminer à partir de valeurs d'accélération transversale et de vitesse de lacet, l'effort transversal avant et l'effort transversal arrière.

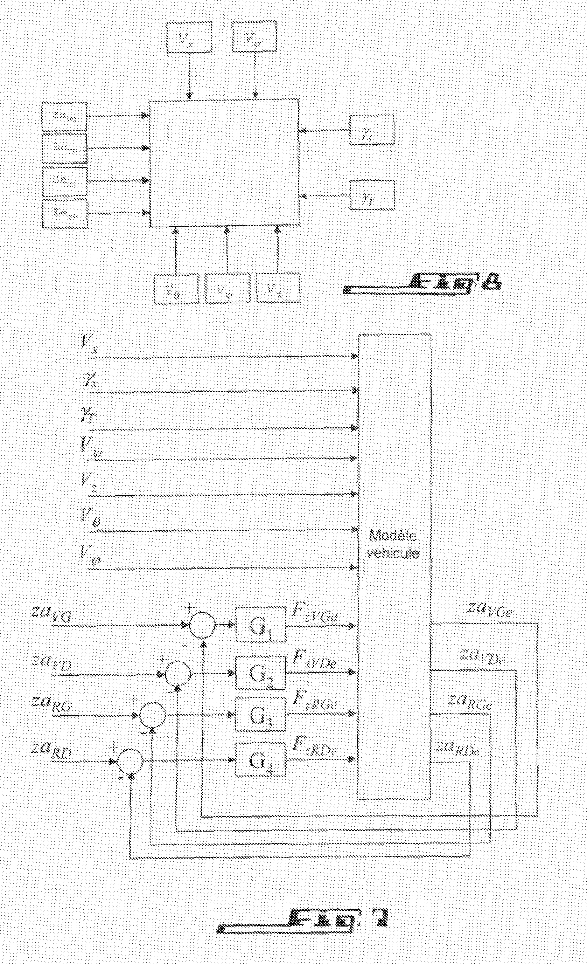

La méthode est également représentée sur la figure 4, qui correspond notamment à une représentation sous Matlab/simulink. Cette figure montre plus particulièrement le traitement qui est mis en oeuvre dans une unité de traitement équipant le véhicule.

Cette unité de traitement est notamment reliée à un ou plusieurs dispositifs de mesure délivrant un signal représentatif de l'accélération transversale $\gamma_T$ et un signal représentatif de la vitesse de lacet $V_\psi$.

Ce traitement met en oeuvre une modèle dynamique, représenté par le bloc B1, qui est exploité en rétroaction sur un régulateur représenté par le bloc B2. Le régulateur B2 reçoit en entrée des écarts entre valeurs d'accélération transversale et vitesse de lacet mesurée et estimée, et il fournit en sortie l'effort avant et l'effort arrière. Le modèle dynamique du bloc B1 reçoit en entrée la sortie du régulateur pour fournir en sortie une accélération transversale estimée et une vitesse de lacet estimée qui sont injectées dans les écarts appliqués en entrée du régulateur B2.

Plus particulièrement, le modèle dynamique mécanique du type bicyclette sans pneu, représenté par le bloc B1, reçoit en entrée des valeurs ou signaux représentatifs de l'effort transversal avant estimé $F_{yVe}$ et de l'effort transversal arrière estimé $F_{yRe}$ pour fournir en sortie des valeurs ou signaux représentatifs d'une accélération transversale estimé $\gamma_{Te}$ et d'une vitesse de lacet estimée $V_{\psi e}$.

Comme représenté schématiquement dans le bloc B1, la vitesse de lacet est déterminée par intégration du moment de l'effort avant $F_{yVe}$ et de l'effort arrière $F_{yRe}$ autour d'un axe vertical coïncidant avec le dispositif de mesure. L'accélération transversale $\gamma_{Te}$ résulte quant à elle de la somme des efforts avant et arrière divisée par la masse du véhicule.

Le régulateur représenté par le bloc B2 reçoit en entrée un premier signal d'écart et un second signal d'écart pour délivrer en sortie des signaux représentatifs de l'effort avant estimé $F_{yVe}$ et de l'effort arrière estimé $F_{yRe}$.

Le premier écart est représentatif de la différence entre l'accélération mesurée $\gamma_T$ c'est-à-dire provenant du dispositif de mesure, et l'accélération estimée $\gamma_{Te}$ résultant du modèle dynamique c'est-à-dire provenant du bloc B1.

Le second écart est représentatif de la différence entre la vitesse de lacet mesurée $V_\psi$ c'est-à-dire provenant du dispositif de mesure et la vitesse de lacet estimée $V_{\psi e}$, c'est-à-dire issue du modèle dynamique du bloc B1.

Comme représenté schématiquement dans le bloc B2, le premier écart et le second écart appliqués en entrée du régulateur B2 sont traités par application d'un traitement du type proportionnel et/ou intégral pour engendrer en sortie des signaux ou valeurs représentatifs de l'effort avant estimé $F_{yVe}$ et de l'effort arrière estimé $F_{yRe}$.

Plus particulièrement, le signal représentatif de l'effort transversal avant $F_{yVe}$ est obtenu par application d'un traitement proportionnel intégral au premier écart, par application d'un traitement proportionnel au second écart, et par combinaison des signaux ainsi engendrés.

Le signal représentatif de l'effort transversal arrière $F_{yRe}$ est obtenu de façon analogue, mais avec des coefficients différents en ce pour chaque traitement proportionnel, ces coefficients étant notamment conditionnés par les valeurs des empattements.

La combinaison des signaux engendrés par les traitements respectivement proportionnel et intégral, et proportionnel appliqués au premier écart et au second écart peut être une combinaison linéaire comme dans l'exemple de la figure 4, mais il peut aussi s'agir de toute autre combinaison non nécessairement linaire.

Ainsi, le régulateur B2 modifie ses sorties $F_{yVe}$ et $F_{yRe}$ sur la base des écarts qu'il reçoit en entrée, de manière à diminuer ces écarts, ce qui permet de faire tendre les valeurs estimées vers les valeurs réelles des efforts transversaux.

De façon générale, différents régulateurs B2 peuvent être mis en oeuvre, par exemple sous forme de régulateurs du type Proportionnel-Intégral-Dérivé, ou bien sous forme de régulateurs non linéaires.

Le passage en temps discret conduit aux équations récurrentes suivantes :

$$[8] \quad \begin{cases} F_{yVe}(k) = \dfrac{1}{\tau} \dfrac{J}{a+b} \big( V_\psi(k) - V_{\psi e}(k) \big) + \dfrac{1}{\tau} \dfrac{b.m}{a+b} V_{ye}(k) \\[2mm] F_{yRe}(k) = -\dfrac{1}{\tau} \dfrac{J}{a+b} \big( V_\psi(k) - V_{\psi e}(k) \big) + \dfrac{1}{\tau} \dfrac{a.m}{a+b} V_{ye}(k) \end{cases}$$

$$[9] \quad \text{avec} : \begin{cases} V_{ye}(k) = V_{ye}(k-1) + T\big(\gamma_T(k) - \gamma_{Te}(k)\big) \\ \gamma_{Te}(k) = \dfrac{1}{m}\big(F_{yVe}(k-1) + F_{yRe}(k-1)\big) \\ V_{\psi e}(k) = V_{\psi e}(k-1) + \mathsf{T}\dfrac{1}{J}\big(a\,F_{yVe}(k) - b\,F_{yRe}(k)\big) \end{cases}$$

où T désigne le pas de temps choisi pour le passage en temps discret, et est inférieur ou égal à $1/1000^{\text{ème}}$ de seconde.

Ces équations sont initialisées avec $V_{\psi e}(0)$ à $V_{\psi}(0)$, $\gamma_{Te}(0)$ à $\gamma_T(0)$ et $V_{ye}(0)$ à 0. Les valeurs $V_{\psi}(k-1)$ et de $\gamma_T(k-1)$ sont respectivement les valeurs de vitesses de lacet et d'accélération transversale mesurées à l'instant $t(k-1)$ c'est-à-dire à l'instant $t=T.(k-1)$.

L'application de la méthode dans un temps discret peut ainsi être mise en oeuvre dans une unité de traitement incluant par exemple un microcontrôleur ou un microprocesseur apte à effectuer, en temps réel, les opérations algébriques permettant de déterminer les termes des équations [8] et [9].

Pour la mise en oeuvre discrétisée en temps réel, il est possible d'introduire des variables supplémentaires : $\varepsilon_{i\gamma}$ qui est l'intégrale de l'erreur d'estimation sur l'accélération transversale, et $\varepsilon_{V\psi}$ qui est l'erreur d'estimation sur la vitesse de lacet.

Les variables sont initialisées avec $F_{yVe}(0)=0$, $F_{yVe}(0)=0$, $F_{yRe}(0)=0$, $\varepsilon_{i\gamma e}(0)=0$ et $V_{\psi e}(0)=V_{\psi}(0)$.

A chaque instant $t(k)$, c'est-à-dire $T.k$, les valeurs de mesures sont récupérés, avec $\gamma_T(k)=\gamma_T(kT)$, et $V_{\psi}(k)=\gamma_{\psi}(kT)$. Des valeurs estimées de ces mesures, notées $\gamma_{Te}(k)$ et $V_{\psi e}(k)$ sont ensuite calculées à partir des efforts transversaux déterminés à l'instant précédent $t(k-1)$, avec les relations suivantes :

$$[10] \quad \begin{aligned} \gamma_{Te}(k) &= \frac{1}{m}\big(F_{yVe}(k-1) + F_{yRe}(k-1)\big) \\ V_{\psi e}(k) &= V_{\psi e}(k-1) + \frac{T}{J}\big(a\,F_{yVe}(k-1) - b\,F_{yRe}(k-1)\big) \end{aligned}$$

Ces relations résultent du système d'équations [5], l'expression de $V_{\psi e}(k)$ étant obtenue par intégration de la seconde ligne du système d'équations [5]. Les variables supplémentaires, notées $\varepsilon_{i\gamma}$ et $\varepsilon_{V\psi}$ sont calculées selon les relations suivantes :

$$[11] \quad \varepsilon_{i\gamma}(k) = \varepsilon_{i\gamma}(k-1) + \mathsf{T}\big(\gamma_T(k) - \gamma_{Te}(k)\big) \quad \text{et} \quad \varepsilon_{V\psi}(k) = V_{\psi}(k) - V_{\psi e}(k).$$

Les efforts transversaux pour l'instant $t(k)$ sont ensuite déterminés selon les relations suivantes :

$$[12] \quad \begin{aligned} F_{yVe}(k) &= \frac{1}{\tau}\frac{b\,m}{a+b}\varepsilon_{i\gamma}(k) + \frac{1}{\tau}\frac{J}{a+b}\varepsilon_{V\psi}(k) \\ F_{yRe}(k) &= \frac{1}{\tau}\frac{a\,m}{a+b}\varepsilon_{i\gamma}(k) - \frac{1}{\tau}\frac{J}{a+b}\varepsilon_{V\psi}(k) \end{aligned}$$

Le processus est ensuite réitéré à l'instant suivant $t(k+1)$.

Les grandeurs $\dfrac{1}{\tau}\dfrac{b\,m}{a+b}\varepsilon_{i\gamma}(k)$ et $\dfrac{1}{\tau}\dfrac{a\,m}{a+b}\varepsilon_{i\gamma}(k)$ constituent respectivement un effort intermédiaire avant et un effort intermédiaire arrière, ces valeurs étant actualisées à chaque itération.

Compte tenu des équations [11], l'actualisation d'une valeur courante d'effort intermédiaire avant

$$\frac{1}{\tau}\frac{b\,m}{a+b}\varepsilon_{i\gamma}(k-1)$$ consiste simplement à ajouter une valeur proportionnelle au premier écart, à savoir

$$\frac{1}{\tau}\frac{b\,m}{a+b}\mathsf{T}\left(\gamma_T(k)-\gamma_{Te}(k)\right),$$ pour obtenir une nouvelle valeur d'effort intermédiaire avant. L'actualisation d'une valeur courante d'effort intermédiaire arrière est réalisée de façon similaire.

La détermination des efforts avant et arrière estimés consiste ensuite simplement à corriger les valeurs d'effort intermédiaire avant et arrière, respectivement par ajout et par soustraction d'une valeur corrective qui est proportionnelle au second écart, cette valeur corrective étant $$\frac{1}{\tau}\frac{J}{a+b}\varepsilon_{V\psi}(k)\;.$$

L'invention offre ainsi une méthode très simple d'évaluation de l'effort transversal avant et de l'effort transversal arrière qui est basée seulement sur une mesure d'accélération transversale et une mesure de vitesse de lacet.

L'accélération transversale et la vitesse de lacet sont par exemple issues d'un dispositif de mesure dédié incluant deux accéléromètres espacés l'un de l'autre longitudinalement par rapport au véhicule, ces capteurs permettant de connaître l'accélération transversale à laquelle le véhicule est soumis, et qui résulte de la moyenne des valeurs issues de deux accéléromètres.

La vitesse de lacet résulte de l'intégration du moment engendré par les accélérations recueillies sur ces deux accéléromètres, autour d'un axe vertical.

Ainsi, cette méthode permet d'estimer les efforts transversaux avant et arrière sans avoir à utiliser de modèle spécifique élaboré. En particulier, il n'est pas nécessaire de modéliser les pneus du véhicule pour évaluer les efforts transversaux.

En effet, le modèle bicyclette classique utilise une modélisation de pneus qui est linéaire. Le modèle bicyclette classique n'est alors valable que jusqu'à une accélération transversale maximale de 4 m/s2.

La méthode selon l'invention n'utilise pas de modèle de pneu mais elle n'impose pas non plus un fonctionnement linéaire du pneu, de sorte que le domaine de validité n'est pas limité à 4 m/s$^2$ d'accélération transversale.

La méthode selon l'invention permet d'effectuer l'évaluation d'effort avant et arrière sans avoir à dériver de signaux, mais en effectuant au contraire seulement des opérations d'intégration. Cette méthode permet ainsi d'éviter les risques importants qu'induirait la mise en oeuvre d'opérations de dérivation de signaux.

Une estimation des efforts transversaux pour chaque roue peut être déterminée à partir d'une estimation des charges verticales de chaque roue, résultant d'une mesure ou autre. En effet, l'effort transversal appliqué par le sol à une roue est proportionnel à sa charge verticale. Les efforts transversaux pour chaque roue peuvent ainsi être déterminés à partir des égalités ci-dessous :

$$F_{yVG}=\frac{F_{zVG}}{F_{zVG}+F_{zVD}}F_{yV}$$

$$F_{yVD}=\frac{F_{zVD}}{F_{zVG}+F_{zVD}}F_{yV}$$

dans lesquelles :

$F_{zVG}$ : charge verticale roue avant Gauche

$F_{zVD}$ : charge verticale roue avant Droite

$F_{zRG}$ : charge verticale roue aRrière Gauche

$F_{zRD}$ : charge verticale roue aRrière Droite

$$F_{yRG}=\frac{F_{zRG}}{F_{zRG}+F_{zRD}}F_{yR}$$

$$F_{yRD} = \frac{F_{zRD}}{F_{zRG} + F_{zRD}} F_{yR}$$

$F_{yVG}$ : effort transversal roue avant Gauche

$F_{yVD}$ : effort transversal roue avant Droite

$F_{yRG}$ :effort transversal roue aRrière Gauche

$F_{yRD}$ : effort transversal roue aRrière Droite

Tout comme pour la mesure des efforts transversaux, on ne peut pas mesurer les efforts verticaux en temps réel de façon directe pour un coût compatible avec la production en série.

Pour pallier cet inconvénient, la présente invention propose deux méthodes d'estimation pour estimer les efforts verticaux : une première méthode dite statique, en boucle ouverte, valable pour des accélérations longitudinale et transversale constantes, et une deuxième estimation dite dynamique, en boucle fermée, qui prend en compte les propriétés dynamiques du véhicule.

Avant de décrire ces deux méthodes, on définit ci-après les différentes variables et paramètres représentatifs de grandeurs physiques qui seront utilisées en référence à la figure 5 qui représente schématiquement un modèle mécanique dynamique d'un véhicule automobile à quatre roues.

On notera donc les grandeurs physiques suivantes par :

$V_x$, $V_y$, et $V_z$ respectivement les vitesses longitudinale, transversale et verticale ;

$V_\theta$, $V_\varphi$, et $V_\psi$, respectivement les vitesses de roulis, de tangage et de lacet ;

$F_{xVG}$, $F_{xVD}$, $F_{xRG}$, et $F_{xRD}$, respectivement les efforts longitudinaux appliqués par le sol aux pneumatique respectivement avant gauche, avant droit, arrière gauche et arrière droit ;

$F_{yVG}$, $F_{yVD}$, $F_{yRG}$, et $F_{yRD}$, respectivement les efforts transversaux appliqués par le sol aux pneumatiques, respectivement avant gauche, avant droit, arrière gauche et arrière droit ;

$F_{zVG}$, $F_{zVD}$, $F_{zRG}$, et $F_{zRD}$, respectivement les efforts verticaux (charge à la roue) appliqués par le sol aux pneumatiques, respectivement avant gauche, avant droit, arrière gauche et arrière droit ;

$Za_{VG}$, $Za_{VD}$, $Za_{RG}$, et $Za_{RD}$, respectivement les débattements des roues par rapport à la caisse (distance entre le centre de roue et le point d'attache supérieur de la suspension sur la caisse), respectivement avant gauche, avant droit, arrière gauche et arrière droit ;

a et b, respectivement les empattements avant et arrière,

E=a+b est l'empattement total,

v est la voie du véhicule, et

h : hauteur du centre de gravité G

On note également :

m : masse du véhicule,

$I_\theta$, $I_\varphi$, et $I_\psi$, respectivement les inerties de roulis, de tangage et de lacet,

g: l'accélération de la pesanteur,

$\gamma_x$ et $\gamma_T$ : respectivement les accélérations longitudinale et transversale du véhicule considérées au centre de gravité G.

On utilisera par la suite, ces mêmes notations pour désigner respectivement les signaux représentatifs de ces grandeurs ; signaux issus de dispositifs de mesure tels que des capteurs ou des estimateurs.

Pour mettre en oeuvre ces méthodes, on équipe le véhicule d'un dispositif d'estimation des efforts de charge apte à délivrer des signaux représentatifs de l'effort de charge subi par chaque roue $F_{zVG}$, $F_{zVD}$, $F_{zRG}$, et $F_{zRD}$.

Comme illustré à la figure 6, la première méthode d'estimation, dite statique, permet de déterminer, à partir des accélérations longitudinale et transversale du véhicule $\gamma_x$ et $\gamma_T$ , considérées au centre de gravité G du véhicule, les efforts verticaux $F_{zVG}$, $F_{zVD}$, $F_{zRG}$, et $F_{zRD}$ (charge à la roue) appliqués sur les pneumatiques, respectivement avant gauche, avant droit, arrière gauche et arrière droit.

Dans cette première méthode, on équipe le véhicule d'un dispositif de mesure délivrant un signal représentatif de l'accélération longitudinale mesurée $\gamma_x$ et on applique ce signal $\gamma_x$ et l'accélération transversale $\gamma_T$, déjà disponible, à l'entrée d'un estimateur pour délivrer des signaux estimés représentatifs de l'effort de charge subi par chaque roue respectivement $F_{zVGe}$, $F_{zVDe}$, $F_{zRGe}$, $F_{zRDe}$.

Les efforts verticaux estimés $F_{zVGe}$, $F_{zVDe}$, $F_{zRGe}$, $F_{zRDe}$ sont alors calculés à partir des équations suivantes :

$$F_{zVGe} = \frac{m\,g\,b}{2E} + \frac{mh\gamma_x}{E} - \frac{mh\gamma_t}{v} \;,$$

$$F_{zVDe} = \frac{m\,g\,b}{2E} - \frac{mh\gamma_x}{E} + \frac{mh\gamma_t}{v} \;,$$

$$F_{zRGe} = \frac{m\,g\,a}{2E} + \frac{mh\gamma_x}{E} - \frac{mh\gamma_t}{v} \;,$$

et

$$F_{zRDe} = \frac{m\,g\,a}{2E} - \frac{mh\gamma_x}{E} + \frac{mh\gamma_t}{v} \;.$$

La deuxième méthode d'estimation, dite dynamique, est illustrée par le schéma bloc de la figure 7.

L'estimation dynamique par boucle fermée utilise la même méthodologie que pour l'estimation des efforts transversaux décrite précédemment.

Cette méthodologie s'applique donc à nouveau et ne sera donc pas décrite.

Pour cette deuxième méthode, le dispositif d'estimation comporte un modèle mécanique du véhicule, conforme à celui décrit à la figure 5, recevant comme première série d'entrées respectivement, la vitesse longitudinale $V_x$, les accélérations longitudinale et transversale $\gamma_x$ et $\gamma_T$, la vitesse de lacet $V_\psi$, la vitesse verticale $V_z$, la vitesse de roulis $V_\theta$, et la vitesse de tangage $V_\varphi$. Il reçoit, comme deuxième série d'entrées, les efforts verticaux estimés $F_{zVGe}$, $F_{zVDe}$, $F_{zRGe}$, $F_{zRDe}$ appliqués par le sol aux pneumatiques des roues respectivement avant gauche, avant droit, arrière gauche et arrière droit. Ces efforts $F_{zVGe}$, $F_{zVDe}$, $F_{zRGe}$, $F_{zRDe}$ correspondent respectivement aux sorties de fonctions de transfert G1 à G4 déterminées et spécifiques à chaque roue. Ces fonctions de transfert G1 à G4 reçoivent sur leurs entrées respectives, l'écart entre les débattements des roues $Za_{VG}$, $Za_{VD}$, $Za_{RG}$, et $Za_{RD}$ mesurés respectivement par des dispositifs de mesure aptes à délivrer des signaux représentatifs desdits débattements, et les débattements des roues $Za_{VGe}$, $Za_{VDe}$, $Za_{RGe}$, et $Za_{RDe}$ estimés par le modèle.

La figure 8 représente par un schéma bloc l'unité de traitement, par exemple intégrée dans un calculateur embarqué dans le véhicule.

Cette unité de traitement reçoit et traite les différentes mesures issues des différents dispositifs de mesure précités en étant apte à mettre en oeuvre les différentes méthodes d'estimation précitées.

Le nombre et le choix des dispositifs de mesure couplés à l'unité de traitement dépendent de la méthode utilisée.

Ainsi, pour la méthode appliquant le modèle bicyclette, deux dispositifs de mesure sont utilisés : un dispositif de mesure de la vitesse de lacet $V_\psi$ et un dispositif de mesure de l'accélération transversale $\gamma_T$.

Pour la méthode dite statique appliquant le modèle mécanique dynamique du véhicule, un autre dispositif de mesure est utilisé en plus des deux précédents : un dispositif de mesure de l'accélération longitudinale $\gamma_x$.

Pour la méthode dite dynamique appliquant le modèle mécanique dynamique du véhicule, huit autres dispositifs de mesure sont utilisés : des dispositifs de mesure des débattements des quatre roues respectivement $Za_{VG}$, $Za_{VD}$, $Za_{RG}$, et $Za_{RD}$, un dispositif de mesure de la vitesse longitudinale $V_x$, un dispositif de mesure de la vitesse verticale $V_z$, un dispositif de mesure de la vitesse de roulis $V_\theta$, et un dispositif de mesure de la vitesse de tangage $V_\varphi$.

Les dispositifs de mesure de vitesse et d'accélération peuvent être regroupés au sein d'une même centrale inertielle, disposée au centre G de gravité du véhicule, et couplée à un système de navigation de type GPS (Global Positioning System).

**Revendications**

1. Méthode pour estimer en temps réel, dans un véhicule automobile, un effort avant ($F_{yVe}$) et un effort arrière ($F_{yRe}$), ces efforts étant appliqués par le sol respectivement aux roues avant et aux roues arrières du véhicule selon une direction transversale, cette méthode consistant à :

   - équiper ce véhicule d'un dispositif de mesure délivrant un signal représentatif d'une accélération transversale mesurée ($\gamma_T$) et un signal représentatif d'une vitesse de lacet mesurée ($V_\psi$), et d'une unité de traitement ;
   - appliquer à ces signaux, dans l'unité de traitement, un traitement de détermination d'effort avant et d'effort arrière basé sur un modèle dynamique du véhicule tel qu'un modèle du type bicyclette sans pneu défini notamment par un empattement avant (a) un empattement arrière (b), une masse (m) et un moment d'inertie de lacet (J), pour délivrer un signal représentatif de l'effort avant estimé ($F_{yVe}$) et de l'effort arrière estimé ($F_{yRe}$).

2. Méthode selon la revendication 1, dans laquelle le traitement inclut une rétroaction, et met en oeuvre un modèle dynamique permettant de déterminer une accélération transversale et une vitesse de lacet à partir d'un effort avant et d'un effort arrière, et consiste à :

   - appliquer aux signaux représentatifs de l'effort avant estimé ($F_{yVe}$) et de l'effort arrière estimé ($F_{yRe}$), un traitement basé sur le modèle dynamique pour former un signal représentatif d'une accélération transversale estimée ($\gamma_{Te}$) et un signal représentatif d'une vitesse de lacet estimée ($V_{\psi e}$) ;
   - former un premier signal d'écart représentatif de la différence entre l'accélération transversale mesurée ($\gamma_T$) et estimée ($\gamma_{Te}$), et un second signal d'écart représentatif de la différence entre la vitesse de lacet mesurée ($V_\psi$) et estimée ($V_{\psi e}$) ;
   - former le signal représentatif de l'effort avant ($F_{yVe}$) par combinaison d'un signal issu d'un traitement tel qu'un traitement proportionnel et/ou intégral appliqué au premier signal d'écart, avec un signal issu d'un traitement tel qu'un traitement proportionnel et/ou intégral appliqué au second signal d'écart ;
   - former le signal représentatif de l'effort arrière ($F_{yRe}$) par combinaison d'un signal issu d'un traitement tel qu'un traitement proportionnel et/ou intégral appliqué au premier signal d'écart, avec un signal issu d'un traitement tel qu'un traitement proportionnel et/ou intégral appliqué au second signal d'écart.

3. Méthode selon la revendication 1 ou 2, dans laquelle :

   - le signal représentatif de l'effort avant ($F_{yVe}$) est obtenu par une combinaison linéaire d'un signal issu d'un traitement proportionnel appliqué au premier signal d'écart, avec un signal issu d'un traitement proportionnel et intégral appliqué au second signal d'écart ;
   - le signal représentatif de l'effort arrière ($F_{Re}$) est obtenu par autre combinaison linéaire d'un signal issu d'un traitement proportionnel appliqué au premier signal d'écart, avec un signal issu d'un traitement proportionnel et intégral appliqué au second signal d'écart.

4. Méthode selon l'une des revendications précédentes, discrétisée, consistant à déterminer une nouvelle valeur d'effort avant estimé ($F_{yVe}(k)$) et une nouvelle valeur d'effort arrière estimé ($F_{yRe}(k)$), à partir de nouvelles mesures d'accélération transversale ($\gamma_T(k)$) et de vitesse de lacet ($V_\psi(k)$), et à partir de valeurs courantes d'effort avant estimé ($F_{yVe}(k-1)$) et d'effort arrière estimé ($F_{yRe}(k-1)$), et par actualisation et correction de valeurs intermédiaires d'effort avant et arrière, consistant à :

   - appliquer aux valeurs courantes d'effort avant estimé ($F_{yVe}(k-1)$) et d'effort arrière estimé ($F_{yRe}(k-1)$), un traitement basé sur le modèle dynamique pour déterminer des nouvelles valeurs d'accélération transversale estimée ($\gamma_{Te}(k)$) et de vitesse de lacet estimée ($V_{\psi e}(k)$) ;
   - déterminer une première valeur d'écart correspondant à la différence entre la nouvelle mesure d'accélération transversale ($\gamma_T(k)$) et la nouvelle accélération transversale estimée ($\gamma_{Te}(k)$), et une seconde valeur d'écart correspondant à la différence entre la nouvelle mesure de vitesse de lacet ($V_\psi(k)$) et la nouvelle vitesse de lacet estimée ($V_{\psi e}(k)$) ;

   - déterminer une nouvelle valeur intermédiaire d'effort avant $\left( \dfrac{1}{\tau} \dfrac{b\,m}{a+b} \varepsilon_{i\gamma}(k) \right)$ par ajout à la valeur courante intermédiaire d'effort avant ( $\dfrac{1}{\tau}\dfrac{bm}{a+b}\varepsilon_{i\gamma}(k-1)$ ) d'une valeur proportionnelle au premier écart

( $\dfrac{1}{\tau}\dfrac{bm}{a+b}\mathsf{T}\big(\gamma_T(k)-\gamma_{Te}(k)\big)$ ) , et une nouvelle valeur intermédiaire d'effort arrière ( $\dfrac{1}{\tau}\dfrac{am}{a+b}\varepsilon_{i\gamma}(k)$ )

par ajout à la valeur courante intermédiaire d'effort arrière ( $\dfrac{1}{\tau}\dfrac{am}{a+b}\varepsilon_{i\gamma}(k-1)$ ) d'une autre valeur proportionnelle au premier écart ( $\dfrac{1}{\tau}\dfrac{am}{a+b}\mathsf{T}\big(\gamma_T(k)-\gamma_{Te}(k)\big)$ ) ;

- déterminer les nouvelles valeurs d'effort avant estimé ($F_{yVe}(k)$) et d'effort arrière estimé ($F_{yRe}(k)$) par application aux nouvelles valeurs intermédiaires d'efforts avant et arrière d'un traitement de correction consistant à ajouter à la nouvelle valeur intermédiaire d'effort avant ( $\dfrac{1}{\tau}\dfrac{bm}{a+b}\varepsilon_{i\gamma}(k)$ ) une valeur proportionnelle au second

écart ( $\dfrac{1}{\tau}\dfrac{J}{a+b}\varepsilon_{V\psi}(k)$ ) et à soustraire à la nouvelle valeur intermédiaire d'effort arrière ( $\dfrac{1}{\tau}\dfrac{am}{a+b}\varepsilon_{i\gamma}(k)$ )

une valeur proportionnelle au second écart ( $\dfrac{1}{\tau}\dfrac{J}{a+b}\varepsilon_{V\psi}(k)$ ) .

**5.** Méthode pour estimer dans un véhicule et en temps réel, un effort transversal appliqué par le sol à chaque roue ($F_{yVG}$, $F_{yVD}$, $F_{yRG}$, $F_{yRD}$), consistant à :

    - équiper ce véhicule de dispositifs de mesure d'effort de charge aptes à délivrer des signaux représentatifs de l'effort de charge subi par chaque roue ($F_{zVG}$, $F_{zVD}$, $F_{zRG}$, $F_{zRD}$) ;
    - déterminer un effort avant estimé $(F_{yVe})$ et un effort arrière estimé ($F_{yRe}$) conformément à l'une des revendications 1 à 4 ;
    - déterminer dans l'unité de traitement l'effort transversal appliqué à la roue avant droite ($F_{yVD}$) et à la roue avant gauche ($F_{yVG}$) comme étant proportionnels respectivement à la charge de la roue avant droite $(F_{zVD})$ et à la charge de la roue avant gauche $(F_{zVG})$ et ayant une somme correspondant à l'effort avant estimé ($F_{yVe}$);
    - déterminer dans l'unité de traitement l'effort transversal appliqué à la roue arrière droite ($F_{yRD}$) et à la roue arrière gauche ($F_{yRG}$) comme étant proportionnels respectivement à la charge de la roue arrière droite $(F_{zRD})$ et à la charge de la roue arrière gauche ($F_{zRG}$) et ayant une somme correspondant à l'effort arrière estimé ($F_{yRe}$) :

**6.** Méthode pour estimer dans un véhicule et en temps réel, un effort transversal appliqué par le sol à chaque roue ($F_{yVG}$, $F_{yVD}$, $F_{yRG}$, $F_{yRD}$), consistant à :

    - équiper ce véhicule d'un dispositif d'estimation d'effort de charge apte à délivrer des signaux estimés représentatifs de l'effort de charge subi par chaque roue ($F_{zVGe}$, $F_{zVDe}$, $F_{zRGe}$, $F_{zRDe}$) ;
    - déterminer un effort avant estimé $(F_{yVe})$ et un effort arrière estimé ($F_{yRe}$) conformément à l'une des revendications 1 à 4 ;
    - déterminer dans l'unité de traitement l'effort transversal appliqué à la roue avant droite $(F_{yVD})$ et à la roue avant gauche ($F_{yVG}$) comme étant proportionnels respectivement à la charge de la roue avant droite ($F_{zVD}$) et à la charge de la roue avant gauche ($F_{zVG}$) et ayant une somme correspondant à l'effort avant estimé ($F_{yVe}$) ;
    - déterminer dans l'unité de traitement l'effort transversal appliqué à la roue arrière droite ($F_{yRD}$) et à la roue arrière gauche ($F_{yRG}$) comme étant proportionnels respectivement à la charge de la roue arrière droite ($F_{zRD}$) et à la charge de la roue arrière gauche ($F_{zRG}$) et ayant une somme correspondant à l'effort arrière estimé ($F_{yRe}$) ;

**7.** Méthode selon la revendication 6 consistant à :

    - équiper ce véhicule d'un dispositif de mesure délivrant un signal représentatif de l'accélération longitudinale mesurée ($\gamma_x$) ; et

- appliquer ce signal ($\gamma_x$) et l'accélération transversale ($\gamma_T$) à l'entrée d'un dispositif d'estimation pour délivrer des signaux estimés représentatifs de l'effort de charge subi par chaque roue ($F_{zVGe}$, $F_{zvDe}$, $F_{zRGe}$, $F_{zRDe}$).

8. Méthode selon la revendication 7, dans laquelle le dispositif d'estimation implémente les équations suivantes :

$$\star\ F_{zVGe} = \frac{m\,g\,b}{2E} + \frac{m\,h\,\gamma_x}{E} - \frac{m\,h\,\gamma_t}{v}\ ,$$

$$\star\ F_{zVDe} = \frac{m\,g\,b}{2E} - \frac{m\,h\,\gamma_x}{E} + \frac{m\,h\,\gamma_t}{v}\ ,$$

$$\star\ F_{zRGe} = \frac{m\,g\,a}{2E} + \frac{m\,h\,\gamma_x}{E} - \frac{m\,h\,\gamma_t}{v}\ ,$$

$$\star\ F_{zRDe} = \frac{m\,g\,a}{2E} - \frac{m\,h\,\gamma_x}{E} + \frac{m\,h\,\gamma_t}{v}\ .$$

avec
a et b, respectivement les empattements avant et arrière,
E= a+b est l'empattement total,
v est la voie du véhicule,
h : hauteur du centre de gravité G du véhicule par rapport au sol,
m : masse du véhicule,
g : l'accélération de la pesanteur,
$\gamma_x$ et $\gamma_T$ : respectivement les accélérations longitudinale et transversale du véhicule considérées au centre de gravité G

9. Méthode selon la revendication 6 consistant à :

- équiper le véhicule d'un ensemble de dispositifs de mesure délivrant des signaux représentatifs de la vitesse véhicule ($V_x$), de la vitesse de roulis ($V_\theta$), de la vitesse de tangage ($V_\varphi$), de l'accélération longitudinale ($\gamma_\chi$), de la vitesse verticale ($V_z$), et des débattements des roues par rapport à la caisse ($za_{VG}$, $za_{VD}$, $za_{RG}$, $za_{RD}$) ; et
- appliquer ces signaux, la vitesse de lacet ($V_\psi$) et l'accélération transversale ($\gamma_T$) à l'entrée d'un dispositif d'estimation.

10. Méthode selon la revendication 9, **caractérisé en ce** le dispositif d'estimation comporte un modèle mécanique du véhicule recevant comme première série d'entrées respectivement, la vitesse longitudinale ($V_x$), les accélérations longitudinale et transversale ($\gamma_x$ et $\gamma_T$), la vitesse de lacet ($V_\psi$), la vitesse verticale ($V_z$), la vitesse de roulis ($V_\theta$), et la vitesse de tangage ($V_\varphi$), et recevant comme deuxième série d'entrées, les efforts verticaux estimés *($F_{zvGe}$, $F_{zVDe}$, $F_{zRGe}$, $F_{zRDe}$)* appliqués par le sol aux pneumatiques des roues respectivement avant gauche, avant droit, arrière gauche et arrière droit ; ces efforts ($F_{zVGe}$, $F_{zVDe}$, $F_{zRGe}$, $F_{zRDe}$) correspondant respectivement aux sorties de fonctions de transfert (G1 à G4) déterminées et spécifiques à chaque roue, fonctions de transfert (G1 à G4) qui reçoivent sur leurs entrées respectives, l'écart entre les débattements des roues ($Za_{VG}$, $Za_{VD}$, $ZA_{RG}$, et $Za_{RD}$) mesurés respectivement par des dispositifs de mesure aptes à délivrer des signaux représentatifs desdits débattements, et les débattements des roues ($Za_{VGe}$, $Za_{VDe}$, $Za_{RGe}$, et $Za_{RDe}$) estimés par le modèle.

Fig. 1

Fig. 2

Fig.3

$V_\psi$ ⟶ ☐ ⟶ $F_{yVe}$

$\delta_T$ ⟶ ☐ ⟹ $F_{yRe}$

Fig.4

B1

$F_{yVe}$ — $1/m$ — $+$ — $\dot{x}_{Te}$

$F_{yRe}$ — $1/m$ — $+$

$a/J$ — $+$

$b/J$ — $+$ — $1/s$ — $V_{\psi e}$

$V_{\psi e}$

B2

$V_\psi$ — $+\,-$ — $J/(a+b)$ — $1/\tau$ — $+$ — $F_{yVe}$

$F_{yVe}$

$a$

$\delta_T$ — $+\,-$ — $m/(a+b)$ — $1/\tau s$ — $b$ — $-\,+$ — $F_{yRe}$

$F_{yRe}$

$\delta_{Te}$

Fig. 5

Fig. 6

17

Fig. 8

Fig. 7

18

**Office européen
des brevets**

**RAPPORT DE RECHERCHE EUROPEENNE**

Numéro de la demande

EP 06 30 1206

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y<br>A | US 2003/195689 A1 (MORI ATSUSHI) 16 octobre 2003 (2003-10-16)<br><br>* alinéa [0057] - alinéa [0060]; figure 3 *<br>* alinéa [0112] - alinéa [0124]; figure 7 *<br>* alinéa [0184] - alinéa [0196]; figures 12,13 *<br>----- | 1,6-8<br>5<br>2-4,9,10 | INV.<br>G01L5/20<br>B60T8/1755<br>B62D6/04 |
| X<br><br>A | EP 0 781 695 A (TOYOTA JIDOSHA KABUSHIKI KAISHA) 2 juillet 1997 (1997-07-02)<br><br>* page 7, ligne 58 - page 9, ligne 35; figures 2,4 *<br>----- | 1<br><br>2-5 | |
| X<br><br>A | US 6 374 172 B1 (YAMAGUCHI HIROYUKI ET AL) 16 avril 2002 (2002-04-16)<br><br>* colonne 4, ligne 10 - ligne 47; figures 1,2 *<br>* colonne 10, ligne 5 - ligne 49 *<br>----- | 1<br><br>2-5 | |
| X<br><br><br>A | EP 1 357 008 A (AISIN SEIKI KABUSHIKI KAISHA; TOYODA KOKI KABUSHIKI KAISHA; ADVICS CO.) 29 octobre 2003 (2003-10-29)<br><br>* alinéas [0032], [0033]; figure 6 *<br>----- | 1<br><br><br>2-5 | DOMAINES TECHNIQUES RECHERCHES (IPC)<br>G01L<br>B62D<br>B60T |
| Y | EP 1 426 259 A (SUMITOMO RUBBER INDUSTRIES LTD) 9 juin 2004 (2004-06-09)<br>* abrégé; figure 1 *<br>-----<br>-/-- | 5 | |

Le présent rapport a été établi pour toutes les revendications

| Lieu de la recherche | Date d'achèvement de la recherche | Examinateur |
|---|---|---|
| Munich | 19 mars 2007 | Trique, Michael |

EPO FORM 1503 03.82 (P04C02)

# EP 1 804 041 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | PATENT ABSTRACTS OF JAPAN vol. 2003, no. 08, 6 août 2003 (2003-08-06) & JP 2003 118558 A (HONDA MOTOR CO LTD), 23 avril 2003 (2003-04-23) * abrégé * ----- | 1 | |
| | | | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| Munich | 19 mars 2007 | Trique, Michael |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.....................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 30 1206

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-03-2007

| Document brevet cité au rapport de recherche | | Date de publication | Membre(s) de la famille de brevet(s) | | Date de publication |
|---|---|---|---|---|---|
| US 2003195689 | A1 | 16-10-2003 | JP | 2003306092 A | 28-10-2003 |
| EP 0781695 | A | 02-07-1997 | DE | 69624210 D1 | 14-11-2002 |
| | | | DE | 69624210 T2 | 10-07-2003 |
| | | | US | 5899952 A | 04-05-1999 |
| US 6374172 | B1 | 16-04-2002 | DE | 10049565 A1 | 03-05-2001 |
| | | | JP | 2001108701 A | 20-04-2001 |
| EP 1357008 | A | 29-10-2003 | JP | 2003312319 A | 06-11-2003 |
| | | | US | 2004016594 A1 | 29-01-2004 |
| EP 1426259 | A | 09-06-2004 | JP | 2004233331 A | 19-08-2004 |
| | | | US | 2004162680 A1 | 19-08-2004 |
| JP 2003118558 | A | 23-04-2003 | AUCUN | | |

EPO FORM P0460

Pour tout renseignement concernant cette annexe : voir Journal Officiel de l'Office européen des brevets, No.12/82